# EUROPÄISCHE PATENTSCHRIFT

(11) **EP 2 591 652 B1**
(45) Veröffentlichungstag und Bekanntmachung des Hinweises auf die Patenterteilung: **27.07.2016**
(21) Anmeldenummer: 12007516.3
(22) Anmeldetag: 05.11.2012
(51) Int. Cl.: A01B 71/06, A01D 90/12

(54) **Antriebsstrang zwischen der Zapfwelle einer Zugmaschine und dem Antriebsgetriebe eines Anhängerfahrzeuges**
Drive train between the p.t.o. shaft of a tractor and the drive transmission of a trailer vehicle
Chaîne de transmission entre la prise de force d'une machine de traction et la transmission d'entraînement d'un véhicule remorque

(30) Priorität: 10.11.2011 DE 102011055206
(43) Veröffentlichungstag der Anmeldung: 15.05.2013
(73) Patentinhaber: B. Strautmann & Söhne GmbH u. Co. KG, 49196 Bad Laer (DE); GKN Walterscheid GmbH, 53797 Lohmar (DE)
(72) Erfinder: Kleine-Nieße, Richard, 49536 Lienen (DE); Stauvermann, Frank, 48629 Metelen (DE); Büth, Patrick, 53804 Much (DE)
(74) Vertreter: Träger, Denis

(56) Entgegenhaltungen:
- EP-A1- 0 598 274
- EP-A2- 2 275 287
- DE-C1- 3 711 317
- US-A- 2 869 660
- US-A- 4 099 594

## Beschreibung

Die Erfindung betrifft ein Anhängefahrzeug mit einem Fahrgestell und einer Deichsel sowie einem oberhalb der Deichsel verlaufenden Antriebsstrang, welcher mit einer Zapfwelle einer Zugmaschine verbindbar ist, wobei der Antriebsstrang mittels eines auf der Deichsel angeordneten Lagerbockes zwischengelagert ist.

Um bei schweren, bzw. großvolumigen Anhängefahrzeugen die Fahreigenschaften und die Fahrsicherheit zu erhöhen, werden diese vorteilhaft mit Deichseln für Tiefanhängung versehen, wobei diese als Starr- oder Knickdeichsel ausgeführt sein können.

Diese Anhängerfahrzeuge sind häufig Arbeitsmaschinen deren Antriebe von der Zapfwelle eines Traktors angetrieben werden, wobei die Einsatzmöglichkeiten sehr vielseitig sind. Ein verbreitetes Aufgabenfeld besteht z.B. in der Landwirtschaft, hier werden angetriebene Anhängerfahrzeuge als Erntewagen, Stalldungsteuer, Güllewagen, Großballenpressen, etc. verwendet.

Zwischen dem Antriebsgetriebe eines der vorgenannten Art entsprechenden Anhängerfahrzeuges und der Zapfwelle einer Zugmaschine, vorzugsweise eines landwirtschaftlichen Traktors, ist bei bekannten Antrieben im Allgemeinen eine Gelenkwelle eingesetzt. Der relativ große Abstand zwischen den Anschlussstellen bedingt lange Gelenkwellen, diese erreichen in den genannten Einsatzfällen häufig, selbst bei weitgehender Überdeckung der Teleskoprohre, einen kritischen Drehzahlbereich, in welchem ein sehr unruhiger, vibrierender Umlauf erfolgt, welcher durch während der Fahrt über unebene Böden in der Deichsel sich aufbauenden Biegeschwingungen, die durch sich auf und ab schaukelnde Stützlast entstehen, verstärkt wird.

Bauartbedingt, und bei Kurvenfahrten verstärkt, entstehen an der Antriebsgelenkwelle an den Kreuzgelenken Beugewinkel, die beträchtliche Schwankungen der Drehgeschwindigkeiten in den Übertragungselementen verursachen. Um den dadurch entstehenden unruhigen Lauf zu vermeiden, werden daher schwere, teure Weitwinkel-Gleichlaufgelenkwellen eingesetzt.

Die Montage dieser schweren Gelenkwellen kann in vielen Fällen von einer Person nicht mehr gehandhabt werden, da das Aufstecken der Gelenkwelle auf den Eingangszapfen des Antriebsgetriebes, wegen des hohen Gewichts und der eingeengten Lage zwischen den Haltearmen der Deichsel erschwert wird.

Die Lage des Kreuzgelenkes zwischen den Haltearmen der Deichsel und bei Kurvenfahrten sowie die Vermeidung des Anstoßens der sich seitlich abknickenden Gelenkwelle an die Haltearme, erfordern eine Baubreite der Deichsel, welche die Wendigkeit von Zugmaschine und Anhängefahrzeug einschränkt, da das Einschlagen des Traktors durch Anstoßen der Hinterräder an die Haltearme begrenzt wird. Die Gefahr, dass hierbei erhebliche Schäden an den teuren Hinterreifen des Traktors entstehen, ist sehr groß.

Weiterhin erfordern spezielle Einsatzfälle eine große Bodenfreiheit. Ein Beispiel hierfür ist das Erstellen von Flachsilos mit Futtermaterial für Rindvieh. Diese Flachsilos werden häufig mit Ladewagen angelegt, welche von einem als Zugfahrzeug dienenden Traktor angetrieben werden. Das im Ladewagen enthaltene Futtermaterial wird in Form eines Silohaufens abgelegt, indem der Ladewagen immer wieder den sich sukzessive erhöhenden Haufen überfährt und hierbei Futterschicht um Futterschicht ablegt. Um das Ladegut gleichmäßig auszutragen, muss zum störungsfreien Auffahren auf den angelegten Silohaufen eine hohe Bodenfreiheit im vorderen Bereich des Ladewagens vorhanden sein, damit die dort angeordneten Aufnahmeorgane beim Auf- und Überfahren kein Erntegut erfassen und vor sich herschieben können, was das Überfahren durch Stauungen sehr behindern würde.

Die benötige Bodenfreiheit wird durch den Einsatz einer so genannten "Knickdeichsel" ermöglicht. Bei den bekannten Ausführungen von Knickdeichseln, treten die bei den starren Deichseln auftretenden Mängel in der Normalstellung ebenso auf. Zusätzlich erhöht sich bei angehobenem vorderen Ladewagenbereich, bedingt durch die Verlängerung der Schieberohre der Gelenkwelle und der daraus resultierenden Verringerung der Überdeckung der Schieberohre, die Vibrationsneigung der Gelenkwelle beim Abladen von Ladegut erheblich.

Aus EP 0598274 B1 ist ein Antriebsstrang zwischen einer Zapfwelle eines Zugfahrzeuges und einem Getriebe eines angehängten Fahrzeuges bekannt, der über mehrere Antriebswellen verfügt, die miteinander über Kupplungen und Gelenke verbunden sind. Der Antriebsstrang ist teilweise in die Zugdeichsel integriert. Bei der Deichsel handelt es sich um eine so genannte Starrdeichsel, die eine Drehung zwischen Zugfahrzeug und angehängtem Fahrzeug nur um eine vertikale Achse ermöglicht, so dass das angehängte Fahrzeug beispielsweise bei Kurvenfahrt dem Zugfahrzeug folgen kann. Eine Knickdeichsel, die eine Drehbewegung der Deichsel um eine horizontale Achse ermöglicht, ist nicht vorgesehen.

Aus DE 2740287 A1 ist eine Antriebsanordnung für gezogene Landmaschinen bekannt, die insbesondere eine verbesserte Anordnung zur Abstützung eines Getriebezuges betrifft, um so das Auslenken einer teleskopischen Anordnung des Getriebezuges bei scharfen Wendungen des Zugfahrzeuges relativ zum gezogenen Fahrzeug aufnehmen zu können. Der Antriebsstrang verläuft oberhalb der Deichsel, bei der es sich wiederum um eine Starrdeichsel ohne Drehmöglichkeit um eine horizontale Achse handelt.

Aus US 6015016 A ist ebenfalls ein Antriebsstrang zwischen einem Zugfahrzeug und einem Anhängefahrzeug bekannt. Zur Lagerung des Antriebsstranges bei abgehängtem Fahrzeug ist ein schwenkbarer Lagerblock vorgesehen. Dieser Lagerbock hat die Aufgabe, die Montagefreundlichkeit, mithin das An- und Abkuppeln der Gelenkwelle, zu vereinfachen und zu erleichtern. Hierzu wird bei Stillstand des Antriebsstranges, vorzugsweise bei komplett abgeschaltetem Zugfahrzeug, der Lagerblock aufgerichtet, so dass er eine Position unterhalb der Gelenkwelle einnimmt und diese abstützt, so dass das Zugfahrzeug abgekoppelt werden kann und die Gelenkwelle durch den Stützbock getragen wird. Ein Abstützen des Antriebsstranges durch den Lagerbock bei sich drehender Gelenkwelle, das heißt: unter Last, ist nicht vorgesehen.

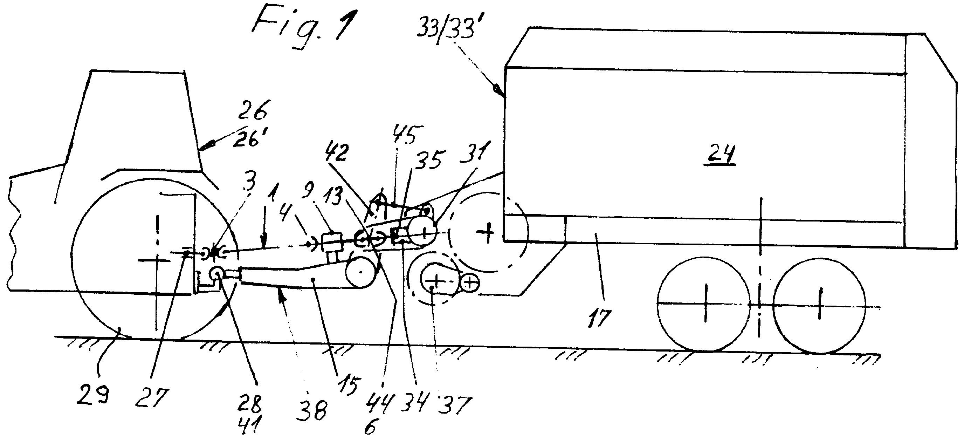

US 2869660 A offenbart einen Antriebsstrang (40, 45), einsetzbar zwischen der Zapfwelle (10) einer Zugmaschine und einem Antriebsgetriebe eines Anhängefahrzeuges, wobei der Antriebsstrang (40, 45) oberhalb eines Deichselholms (Fig. 1) verlaufen kann. Der Antriebsstrang kann zwischen der Zapfwelle (10) der Zugmaschine und dem Eingangszapfen des Anhängefahrzeuges mittels eines auf der Deichsel angeordneten Lagerbockes (41, 42, 43) zwischengelagert sein. Bei der Deichsel handelt es sich jedoch um eine Starrdeichsel, so dass es nicht möglich ist, die Bodenfreiheit des angehängten Fahrzeuges zu variieren.

EP 2275287 A2 offenbart ein Fahrzeug, welches über eine Knickdeichsel verfügt. Die Knickdeichsel wird gebildet durch eine Deichsel (4) mit Haltearmen, die auf Bolzen (14) gelagert mit dem Fahrgestell des Fahrzeuges verbunden sind und wobei an den Enden der Haltearme Hubzylinder (13) angreifen, mittels derer die Deichsel (4) um eine Mittelachse drehbar gelagert ist. Eine zusätzliche Lagerung des Antriebsstranges auf der Deichsel mittels eines Lagerbocks ist nicht vorgesehen.

Die vorliegende Erfindung hat sich die Aufgabe gestellt, den unruhigen Lauf der Antriebsorgane zwischen Zugmaschine und Anhängefahrzeug an einem mit einer Knickdeichsel ausgerüsteten Anhängefahrzeug zu vermeiden und daraus resultierende Verschleiß- und Bruchschäden zu verhüten. Weiterhin soll die Handhabung beim Anbau der Gelenkwellen sowie die Wendigkeit von Zugmaschine und Anhängefahrzeug verbessert werden.

Die genannte Aufgabe wird erfindungsgemäß durch die Merkmale des Anspruchs 1 gelöst.

Ein solches System stellt eine so genannte "Knickdeichsel" dar, mit welcher die für spezielle Einsatzfälle erforderliche Bodenfreiheit zwischen dem Vorderteil des Anhängefahrzeuges und dem Boden realisiert werden kann. Durch die Zwischenlagerung des Antriebsstranges reduziert sich die von der Gelenkwelle zu überbrückende Entfernung und hieraus resultierend das Gewicht der Einzelteile. Eine leichtere, nur mit einem Weitwinkel-Gleichlaufgelenk und einem Kreuzgelenk ausgestattete Gelenkwelle ist somit einsetzbar. Weiterhin verlagert sich der Anschlusspunkt am Anhängefahrzeug in Richtung Zugmaschine in einen besser zugänglichen Bereich wodurch sich die Handhabung, insbesondere beim An- und Abbau der Gelenkwelle verbessert.

Besonders günstig ist es, wenn bei der genannten Ausführungsform mit Knickdeichsel der Antriebsstrang zwischen Lagerbock und Eingangszapfen des Anhängefahrzeuges ein Gelenk umfasst, dessen Mittelpunkt auf einer die Bolzen durchlaufende Mittelachse liegt. Die Mittelachse der Bolzen ist so angeordnet, dass sie den Mittelpunkt des Doppelgelenks durchquert, bzw. angenähert durchquert. Bei dem Gelenk kann es sich vorzugsweise um ein Doppelgelenk handeln. Die Anordnung des Gelenk-Mittelpunktes auf der Mittelachse ist besonders vorteilhaft, wenn das Vorderteil des Anhängefahrzeuges mittels der Knickdeichsel angehoben bzw. abgesenkt wird, da das Anheben des Vorderteils sonst eine erhebliche Längenänderung des Antriebsstranges bewirken würde, die durch ein Ineinanderschieben der im Antriebsstrang vorhandenen Profilrohre der Gelenkwelle kompensiert werden müsste.

Weiterhin ist es günstig, wenn der Lagerbock derart zwischen den Haltearmen der Knickdeichsel angeordnet ist, dass zumindest der Gelenkwellen-Aufnahmezapfen einer im Lagerbock gelagerten Welle sich vor einem durch die Haltearme gebildeten Zwischenraum befindet. Hierdurch erleichtert sich die Handhabung, da beim Anbau der Gelenkwelle nicht zwischen den Haltearmen hantiert werden muss.

Die Überbrückung des Abtriebszapfens des Lagerbocks zum Eingangszapfen des Antriebsgetriebes erfolgt zwischen den enger gerückten Haltearmen mittels eines Doppelgelenks, welches vorzugsweise mit einer Überlastkupplung ausgestattet ist.

Indem der Lagerbock insgesamt in Richtung Zugmaschine gesehen vor den Haltearmen angeordnet ist wird eine schmalere Gestaltung der Deichsel ermöglicht. Durch eine schmalere Deichselbauart und einem sich daraus ergebenden verringertem Wendekreis reduziert sich die Gefahr von Reifenschäden beim Einschlagen der Zugmaschine.

Für alle Ausführungsformen ist es von Vorteil, wenn der Antriebsstrang ein Gelenk mit einer Aufsteckgabel umfasst, welches mit einem Abtriebszapfen der im Lagerbock gelagerten Welle verbunden ist und das Gelenk auf dem Abtriebszapfen der Welle axial verschiebbar angeordnet ist. Ein zumindest geringfügiges axiales Spiel ermöglicht die Kompensation kleiner, bei Belastung auftretender Längenänderungen im Antriebsstrang und verhindert Verspannungen zwischen den Bauteilen.

In einer bevorzugten Ausführungsform umfasst das im Antriebsstrang enthaltene Gelenk, welches sich zwischen Lagerbock und Eingangszapfen des Anhängefahrzeuges befindet, einen Schutztrichter, welcher mit einem den Abtriebszapfen der Welle abdeckenden Schutz eine Einheit bildet. Durch die Verbindung des Schutztrichters des Doppelgelenks mit dem feststehenden Schutz des Eingangszapfens wird die Verdrehsicherung des angeschlossenen Schutztrichters ohne ein sonst übliches Halteelement, beispielsweise einer Haltekette, ermöglicht. Hierdurch erhöht sich die Arbeitssicherheit und reduziert sich gleichzeitig die Gefahr, dass Schmutzpartikel an die beweglichen Teile des Antriebes gelangen.

Nachstehend wird die Erfindung an Beispielen beschrieben und in den Zeichnungen dargestellt.
Fig. 1 zeigt die Anordnung eines Antriebsstranges auf einer Knickdeichsel für Tiefanhängung zwischen einem Traktor und einem Ladewagen in Transportstellung.
Fig. 2 zeigt eine Draufsicht auf Fig. 1, aus der die maximale Einschlagmöglichkeit des Traktors bei Kurvenfahrten ersichtlich ist.
Fig. 3 zeigt die Lage des Antriebsstranges bei abgesenkter Knickdeichsel.
Fig. 4 zeigt eine Draufsicht auf Fig. 3.
Fig. 5 zeigt die Lage des Antriebsstranges auf einer angehobenen Knickdeichsel.
Fig. 6 zeigt die Anordnung des Antriebsstranges auf einher Starrdeichsel in einem Ausführungsbeispiel, das nicht zur Erfindung gehört.
Fig. 7 zeigt eine Anordnung einer Weitwinkel-Gleichlauf-Gelenkwelle auf einer Knickdeichsel.

Figur 1 zeigt andeutungsweise eine Zugmaschine 26, hier einen Traktor 26' mit Reifen 29. Der Traktor 26' ist mittels einer Knickdeichsel 38 und über einen darüber angeordneten Antriebsstrangs 1 mit einem Anhängefahrzeug 33 verbunden. Beim Anhängefahrzeug 33 handelt es sich um einen Ladewagen 33'. Beide Fahrzeuge bilden gemeinsam ein Gespann. Knickdeichseln 38 finden überwiegend bei Ladewagen 33' oder Erntemaschinen, die Futter mittels einer Aufsammeltrommel 37 vom Boden aufnehmen, Verwendung.

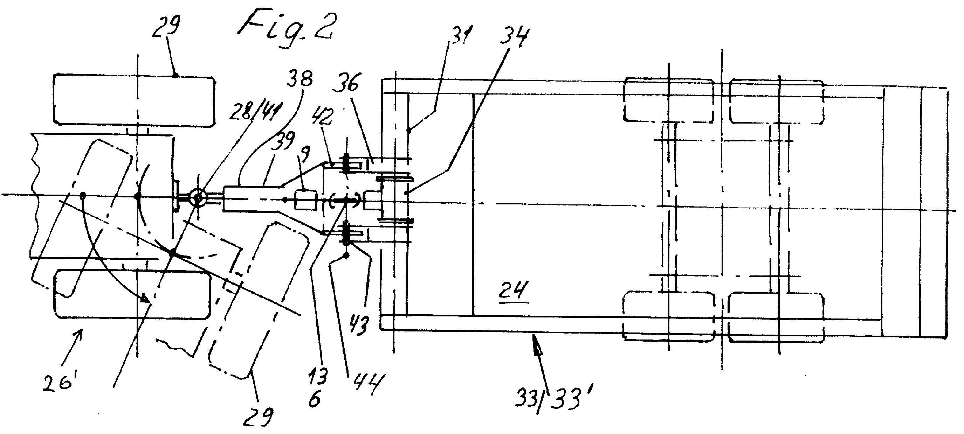

Figur 2 zeigt eine Draufsicht auf das Gespann gemäß Fig. 1, wobei auch die maximale Einschlagmöglichkeit des Traktors 26' bei Kurvenfahrten ersichtlich ist. Die Stellung bei Geradeausfahrt ist mit einer durchgezogenen Linie, die Stellung bei maximalem Einschlag gestrichelt dargestellt. Die Stellungen der Reifen 29 sind jeweils erkennbar. Bei Kurvenfahrt ergibt sich eine erhöhte Wendigkeit des aus Traktor 26' und Anhängefahrzeug 33 bestehenden Gespanns, da bei schmaler Baubreite einer starren Deichsel 15 bzw. der Knickdeichsel 38 die Hinterradreifen 29 des Traktors mehr Freiraum zum Deichselholm 39 erhalten. Der Wenderadius des Gespanns verringert sich dadurch.

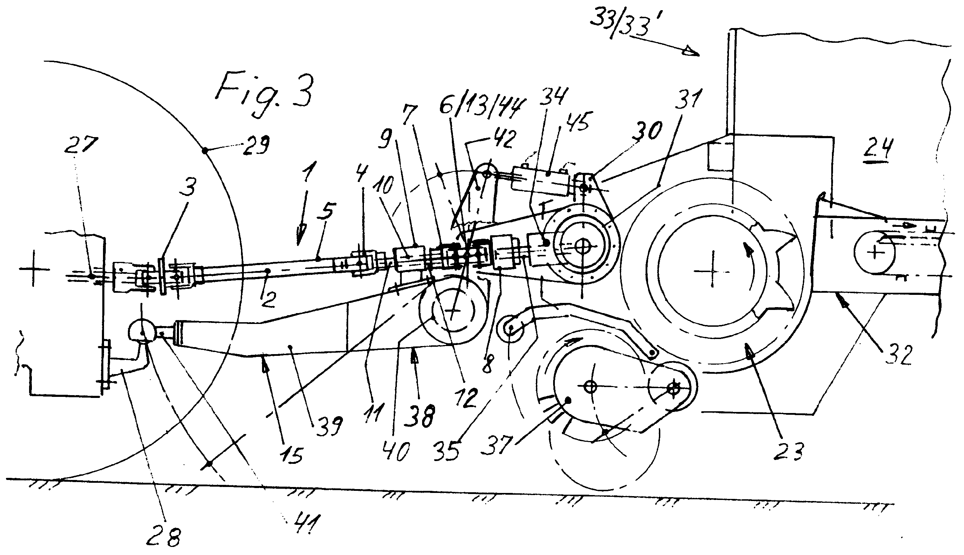

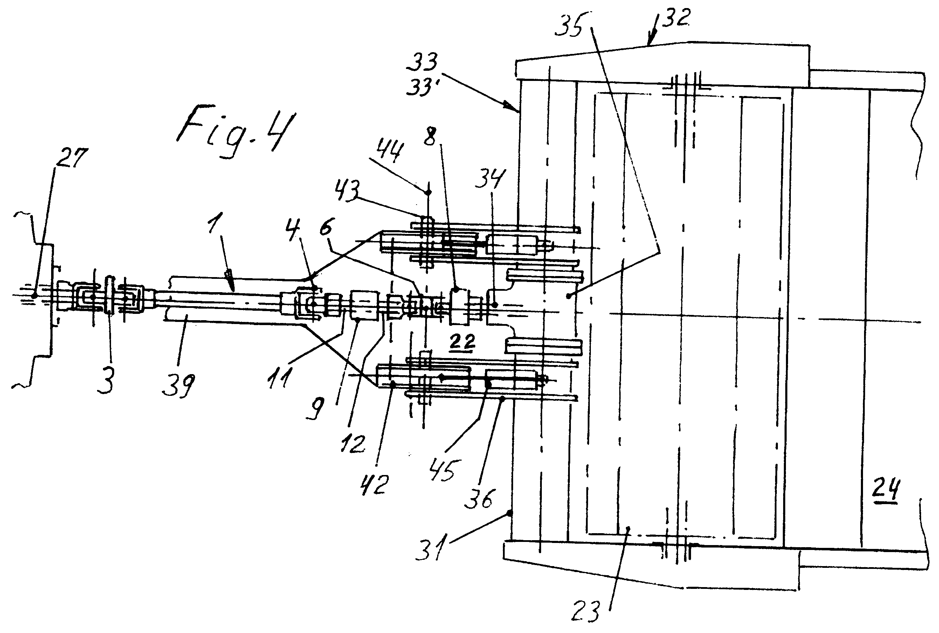

Figur 3 (Seitenansicht) und Figur 4 (Draufsicht) zeigen einen hinter einer nicht näher dargestellten Zugmaschine 26, vorzugsweise einem Traktor 26', angehängten Ladewagen 33'. Der Traktor 26' ist mittels einer Knickdeichsel 38 mit dem Ladewagen 33' verbunden. Den Traktor 26' verbindet außerdem der Antriebsstrang 1 mit dem Ladewagen 33', welcher zwischen der Zapfwelle 27 des Traktors und dem Eingangszapfen 35 eines Antriebsgetriebes 34 des Ladewagen 33' an einer Knickdeichsel 38 für Tiefanhängung angeordnet ist. Der Antriebsstrang 1 ist mittels eines Lagerbocks 9 auf der Knickdeichsel 38 zwischengelagert. Er umfasst eine Gelenkwelle 2 mit einem Weitwinkel-Gleichlaufgelenk 3, ein Kreuzgelenk 4 und Profilrohre 5. Im Lagerbock 9 ist eine zum Antriebsstrang 1 gehörende Welle 10 gelagert, die mit einem Antriebszapfen 11 und einem Abtriebszapfen 12 versehen ist. Der Antriebsstrang sieht weiterhin ein Doppelgelenk 6 vor, das mit einer Aufsteckgabel 7 und einer Überlastkupplung 8 ausgestattet ist. Die Aufsteckgabel 7 ist auf dem Antriebszapfen 12 axial verschiebbar, so dass die in bestimmten Einsatzfällen auftretenden, relativ geringen Längenänderungen zwischen Abtriebszapfen 12 und Doppelgelenk 6 beim Verschwenken der Knickdeichsel 38 ausgeglichen werden.

Die Knickdeichsel 38 besteht aus einem schmalen, sich am Ende zur Aufnahme eines Querrohres 40 verbreiternden Deichselholm 39, an dessen Stirnseite im Bereich des Traktors eine Zugkugelkupplung 41 angeordnet ist. Am Querrohr 40 sind Haltearme 42 angebracht, die mit Lagerbuchsen zur Aufnahme von Bolzen 43 zur Verbindung mit dem Fahrgestell 32 des Ladewagens 33' dienen. Der Lagerbock 9 ist auf der Oberseite des Deichselholms 39 angeordnet.

Der Antriebsstrang 1 ist mittels der Aufsteckgabel des Weitwinkel-Gleichlaufgelenks 3 mit der Zapfwelle 27 des Traktors verbunden. Das Kreuzgelenk 4 ist auf dem mit einem Vielkeilprofil ausgestatteten Antriebszapfen 11 der Welle 10 aufgesteckt. Das Doppelgelenk 6 ist mit der Vielkeilbuchse der Überlastkupplung 8 auf den Eingangszapfen 35 des Antriebsgetriebes 34 des Ladewagens 33' ortsfest montiert. Eine Aufsteckgabel 7 ist auf dem Vielkeilprofil des Abtriebzapfens 12 axial verschiebbar angeordnet.

Seine optimale Drehleistung überträgt der Antriebsstrang 1 im gestreckten Zustand, d.h. wenn alle Bauelemente von Antriebs- bis zur Abgabestelle, einschließlich des Lagerbocks 9 eine gerade Linienführung aufweisen. Da die maximalen Belastungswerte bei der Aufnahme von Futter auftreten, bei der sich die Knickdeichsel 38 in abgesenkter Lage befindet, wird die gerade Linienführung für diesen Einsatzfall gewählt.

Im Einsatz bei Straßenfahrt befindet sich die Knickdeichsel 38 ebenfalls in abgesenkter Stellung. Die Aufsammeltrommel 37 des Ladewagens 33' ist angehoben, der Antriebsstrang 1 ist nahezu gestreckt und nicht eingeschaltet.

Im Arbeitseinsatz, bei der Futteraufnahme, ist die Aufsammeltrommel 37 bis in Bodennähe abgesenkt und nimmt vorzugsweise in Schwaden am Boden liegendes Futter auf. Das Futter wird einer Pressvorrichtung 23 zugeführt, die es in einen Laderaum 24 schiebt. Über den in etwa in gestreckter Lage befindlichen Antriebsstrang 1 wird hierbei die erforderliche Antriebsleistung von der Zapfwelle 27 des Traktors 26 zum Eingangszapfen 35 des Ladewagens 33' übertragen.

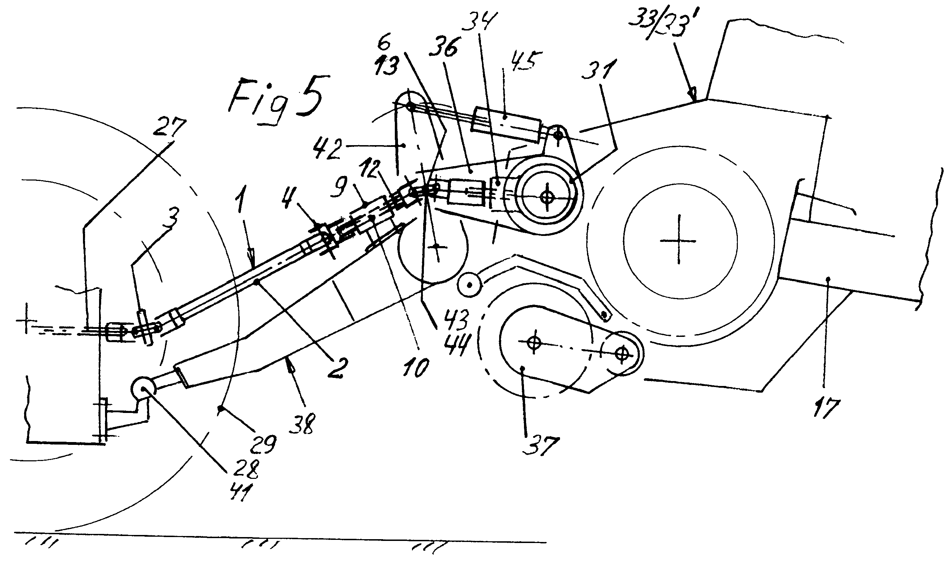

Figur 5 zeigt die Lage des Antriebsstranges 1 auf einer angehobenen Knickdeichsel 38. Das Anheben der Knickdeichsel ist in der Regel beim Abladen und Verteilen des im Laderaum 24 befindlichen Futters erforderlich, weil der Bereich, in dem ein Flachsilo entstehen soll, wiederholt überfahren und das Futter dabei schichtweise abgelegt werden muss. Der so entstehende Futterhaufen, der das spätere Flachsilo bildet, weist an seinem einen Ende eine ansteigende Auffahrt und an seinem anderen Ende eine abfallende Abfahrt auf. Damit der Traktor mit dem angehängten Ladewagen 33' die Auf- und Abfahrt bewältigen kann, ohne dass es im Bereich des Ladewagen-Vorderteils zu einem Kontakt zwischen Futter und Vorderteil kommt, ist eine möglichst große Bodenfreiheit während der Überfahrt erforderlich. Um diese zu erreichen wird die Knickdeichsel 38 mittels zweier Hubzylinder 45 um die durch die Bolzen 43 verlaufende Mittelachse 44 verschwenkt. Im Bereich des Doppelgelenks 6 entsteht dabei ein Beugewinkel. Die Drehbewegungen des Antriebs können weiterhin gleichmäßig übertragen werden.

Bei angehobener Knickdeichsel 38, beim Abladen von Futter auf Flachsilos, treten weniger hohe Belastungen auf, so dass die zusätzlich durch die veränderten Beugewinkel ansteigenden Beanspruchungen im Antriebsstrang, insbesondere im Doppelgelenk 6, in zulässigen Grenzen bleiben.

In Einsatzfällen, in denen eine Knickdeichsel nicht erforderlich ist, ist es möglich, diese durch den Austausch der Hubzylinder 45 gegen starre Stützen außer Funktion zu setzen.

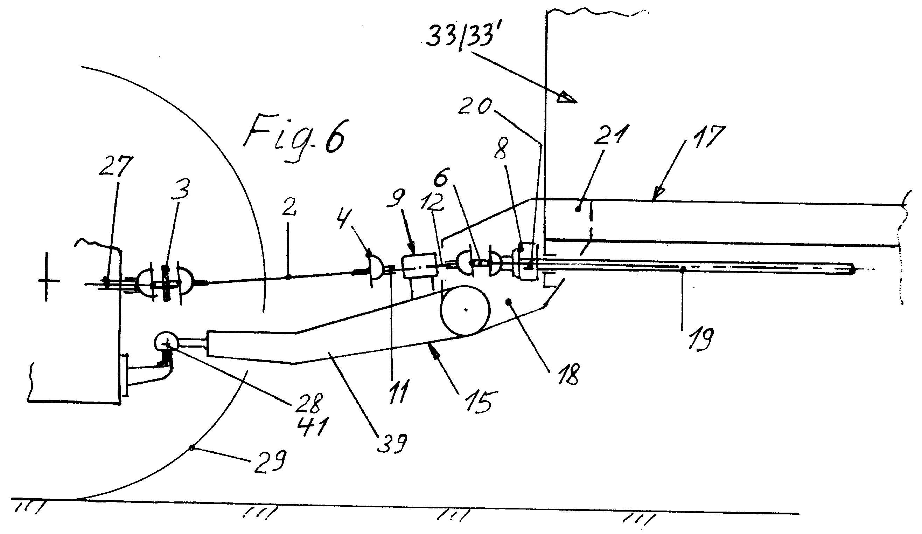

Figur 6 zeigt das Ausführungsbeispiel eines Anhängefahrzeuges mit starrer Deichsel 15, das nicht zur Erfindung gehört.

Eine solche starre Deichsel 15 findet Verwendung, wenn eine aufwendigere Knickdeichsel entbehrlich ist. Das ist beispielsweise bei Maschinengruppen wie Stalldungstreuern, Güllewagen, Transportanhängern etc. der Fall.

Die starre Deichsel 15 ist fest mit dem Fahrgestell 17 eines Stalldungstreuers 33" verbunden. Der Deichselholm 39 ist durch Verbindungselemente 18 fest an der Stirnseite des Fahrgestells 17 am Querträger 21 angeschlossen. Der Anschlusszapfen 20 der Antriebswelle 19 ist zwischen den Verbindungselementen 18 angeordnet. Alle bereits bei der Knickdeichsel-Ausführung genannten vorteilhaften Merkmale des Antriebsstrangs 1 treffen auch bei der starren Deichsel 15 zu.

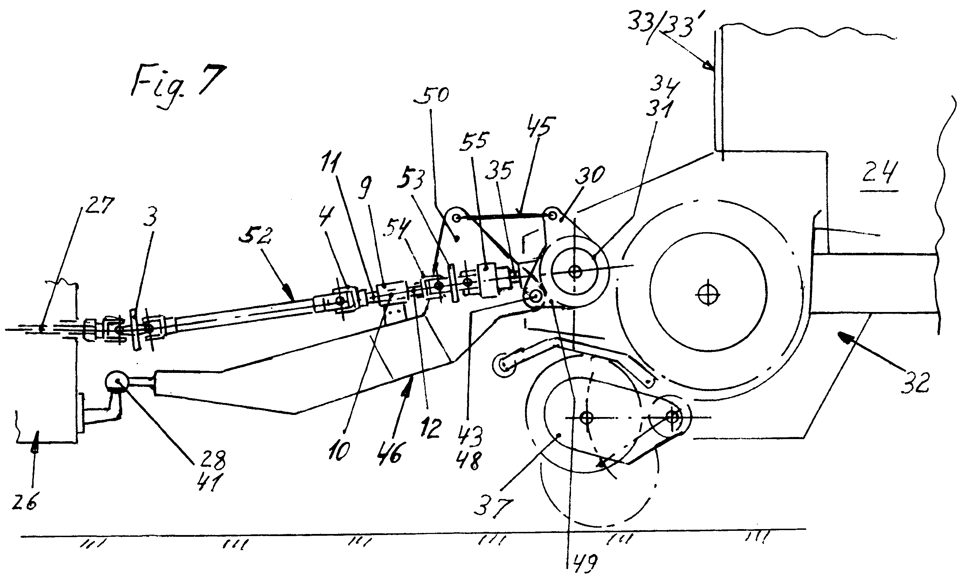

Figur 7 zeigt ein weiteres Ausführungsbeispiel eines Ladewagens 33' mit einer Knickdeichsel 46. Die Knickdeichsel 46 ist an Aufnahmeböcken 49 am Querrohr 31 mittels ihrer Haltearme 50 auf Bolzen 43 gelagert und mittels der Hubzylinder 45 verschwenkbar. Die Mittelachse 48 der Bolzen 43 durchquert hierbei nicht den Mittelpunkt eines Doppelgelenks. Zur Optimierung der Laufeigenschaften des Antriebsstranges 52 wird hierbei abtriebsseitig ein Weitwinkel-Gleichlaufgelenk 53, vorteilhaft ausgestattet mit einer Überlastkupplung, an Stelle des Doppelgelenks verwendet. Das Weitwinkel-Gleichlaufgelenk 53 ist mit auf dem Eingangszapfen 35 des Antriebsgetriebes 34 ortsfest verbunden. Aus dem Abtriebszapfen 12 der Welle 10 des Lagerbocks 9 mit seiner Aufsteckgabel 54 ist er axial verschiebbar angeordnet. Über die axiale Verschiebbarkeit können die auftretenden, relativ geringen Längenänderungen zwischen Abtriebszapfen 12 und Weitwinkel-Gleichlaufgelenk 53 beim Verschwenken der Knickdeichsel 46 ausgeglichen werden.

Der Antriebsstrang 1 ist an allen beweglichen Teilen gegen Berührung durch nicht näher dargestellte, handelsübliche und gesetzlich vorgeschriebene Schutzvorrichtungen gesichert.

**Bezugszeichen**

| | | | |
|---|---|---|---|
| 1 | Antriebsstrang | 29 | Hinterradreifen |
| 2 | Gelenkwelle | 30 | Halter |
| 3 | Weitwinkel-Gleichlaufgelenk | 31 | Querrohr |
| 4 | Kreuzgelenk | 32 | Fahrgestell |
| 5 | Profilrohr | 33 | Anhängefahrzeug |
| 6 | Gelenk *(Doppelgelenk)* | 33' | Ladewagen |
| 7 | Aufsteckgabel | 33" | *Stalldungstreuer* |
| 8 | Überlastkupplung | 34 | Antriebsgetriebe |
| 9 | Lagerbock | 35 | Eingangszapfen *(am Anhängefahrzeug 33*'*)* |
| 10 | Welle | 36 | Aufnahmeblock *(bei Variante "drehachse geht durch Gelenkmittelpunkt")* |
| 11 | Aufnahmezapfen *(der Welle 10)* | 37 | Aufsammeltrommel |
| 12 | Abtriebszapfen *(der Welle 10)* | 38 | Knickdeichsel. *(bei variante "Drehachse geht durch* Ge*lenkmittelpunkt")* |
| 13 | Mittelpunkt | 39 | Deichselholm |
| | | 40 | Querrohr |
| 15 | Deichsel | 41 | Zugkugelkupplung |
| 16 | | 42 | Haltearme |
| 17 | Fahrgestell | 43 | Bolzen |
| 18 | Verbindungselement | 44 | Mittelachse |
| 19 | Antriebswelle | 45 | Hubzylinder |
| 20 | Eingangszapfen *(am Anhängefahrzeug 33")* | 46 | Knickdeichsel *(bei Variante "mit Gelenk 53" (**Fig. 7**))* |
| 21 | Querträger | 47 | |
| 22 | Zwischenraum | 48 | Mittelachse |
| 23 | Pressvorrichtung | 49 | Aufnahmeblock *(bei Variante "mit Gelenk 53" (**Fig. 7**))* |
| 24 | Laderaum | 50 | Haltearme |
| 25 | | 51 | |
| 26 | Zugmaschine | 52 | Antriebsstrang *(bei Varianre "mit Gelenk 53" (**Fig. 7**))* |
| 26' | Traktor | 53 | Gelenk *(Weitwinkel-Gleichlaufgelenk)* |
| 27 | Zapfwelle | 54 | Aufsteckgabel *(bei Variante "mit Gelenk 53" (**Fig. 7**))* |
| 28 | Anhängevorrichtung *(Zugkugel)* | 55 | Überlastkupplung *(bei Variante "mit Gelenk 53"(**Fig. 7**))* |

## Patentansprüche

1. Anhängefahrzeug (33) mit einem Fahrgestell (17) und einer Deichsel (15), welche einen Deichselholm (39) umfasst, zur Anhängung an eine Zugmaschine (26) sowie mit einem Antriebsstrang (1) welcher mit einer Zapfwelle (27) der Zugmaschine (26) verbindbar ist, wobei in Anhängeposition
- der Antriebsstrang (1) zwischen der Zapfwelle (27) der Zugmaschine (26) und einem Antriebsgetriebe (34) des Anhängefahrzeuges (33), welches einen Eingangszapfen (20; 35) aufweist, angeordnet ist,
- die Deichsel (15) in Tiefanhängung an eine Anhängevorrichtung (28) der Zugmaschine (26) angekuppelt ist,
- der Antriebsstrang (1) oberhalb des Deichselholms (39) verläuft und
- der Antriebsstrang (1) zwischen der Zapfwelle (27) der Zugmaschine (26) und dem Eingangszapfen (35) des Anhängefahrzeuges (33) mittels eines auf der Deichsel (15) angeordneten Lagerbocks (9) zwischengelagert ist,
**dadurch gekennzeichnet, dass**
- die Deichsel (15) Haltearme (42; 50) umfasst und das die Haltearme (42; 50) auf Bolzen (43) gelagert mit dem Fahrgestell (17) des Anhängefahrzeuges (33) verbunden sind und an den Enden der Haltearme (42; 50) Hubzylinder (45) angreifen mittels derer die Deichsel (15) um eine Mittelachse (44) drehbar gelagert ist und
- der Antriebsstrang (1) zwischen Lagerbock (9) und Eingangszapfen (20; 35) des Anhängefahrzeuges (33) ein Gelenk (6) umfasst, dessen Mittelpunkt (13) auf einer die Bolzen (43) durchlaufende Mittelachse (44) liegt.

2. Anhängefahrzeug (33) nach Anspruch 1, **dadurch gekennzeichnet, dass** der Lagerbock (9) eine Welle (10) mit einem Aufnahmezapfen (11) für eine Gelenkwelle (2) umfasst und wobei der Lagerbock (9) derart zwischen den Haltearmen (42; 50) angeordnet ist, dass sich der Aufnahmezapfen (11) für die Gelenkwelle (2) vor einem durch die Haltearme (42; 50) gebildeten Zwischenraum (22) befindet.

3. Anhängefahrzeug (33) nach einem der Ansprüche 1 oder 2, **dadurch gekennzeichnet, dass** der Lagerbock (9) in Richtung Zugmaschine (26) gesehen vor den Haltearmen (42; 50) angeordnet ist.

4. Anhängefahrzeug (33) nach einem der Ansprüche 1 bis 3, **dadurch gekennzeichnet, dass** der Antriebsstrang (1) ein Gelenk (6; 53) mit einer Aufsteckgabel (54) umfasst, welches mit einem Abtriebszapfen (12) einer im Lagerbock (9) gelagerten Welle (10) verbunden ist und das das Gelenk (6; 53) auf dem Abtriebszapfen (12) der Welle (10) axial verschiebbar angeordnet ist.

5. Anhängefahrzeug (33) nach Anspruch 4, **dadurch gekennzeichnet, dass** das Gelenk (6; 53) von einem Schutztrichter umfasst wird und dass der Schutztrichter mit einem den Abtriebszapfen (12) der Welle (10) abdeckenden Schutz eine Einheit bildet.

## Claims

1. Trailer vehicle (33) having a chassis (17) and a drawbar (15) which comprises a drawbar rail (39), for attaching to a tractor unit (26), and having a drive train (1) which can be connected to a power take-off shaft (27) of the tractor unit (26), wherein, in the attached position,
- the drive train (1) is arranged between the power take-off shaft (27) of the tractor unit (26) and a drive transmission (34) of the trailer vehicle (33), which drive transmission (34) has an input journal (20; 35),
- the drawbar (15) is coupled in a low attaching position to an attaching apparatus (28) of the tractor unit (26),
- the drive train (1) runs above the drawbar rail (39), and
- the drive train (1) is mounted in an intermediate manner between the power take-off shaft (27) of the tractor unit (26) and the input journal (35) of the trailer vehicle (33) by means of a bearing block (9) which is arranged on the drawbar (15), **characterized in that**
- the drawbar (15) comprises holding arms (42; 50), and **in that** the holding arms (42; 50) are connected to the chassis (17) of the trailer vehicle (33) in a manner which is mounted on pins (43), and lifting cylinders (45) act at the ends of the holding arms (42; 50), by means of which lifting cylinders (45) the drawbar (15) is mounted such that it can be rotated about a centre axis (44), and
- the drive train (1) comprises a joint (6) between the bearing block (9) and the input journal (20; 35) of the trailer vehicle (33), the centre point (13) of which joint (6) lies on a centre axis (44) which runs through the pins (43).

2. Trailer vehicle (33) according to Claim 1, **characterized in that** the bearing block (9) comprises a shaft (10) with a receiving journal (11) for an articulated shaft (2), and the bearing block (9) being arranged between the holding arms (42; 50) in such a way that the receiving journal (11) for the articulated shaft (2) is situated in front of an intermediate space (22) which is formed by the holding arms (42; 50).

3. Trailer vehicle (33) according to either of Claims 1 and 2, **characterized in that** the bearing block (9) is arranged in front of the holding arms (42; 50) as viewed in the direction of the tractor unit (26).

4. Trailer vehicle (33) according to one of Claims 1 to 3, **characterized in that** the drive train (1) comprises a joint (6; 53) with a plug-on yoke (54), which joint (6; 53) is connected to an output journal (12) of a shaft (10) which is mounted in the bearing block (9), and **in that** the joint (6; 53) is arranged axially displaceably on the output journal (12) of the shaft (10).

5. Trailer vehicle (33) according to Claim 4, **characterized in that** the joint (6; 53) is surrounded by a guard cone, and **in that** the guard cone forms a unit with a protective means which covers the output journal (12) of the shaft (10).

## Revendications

1. Véhicule remorque (33) comprenant un châssis (17) et un timon (15) qui comprend un longeron de timon (39) destiné à être attelé à un tracteur (26) et comprenant une chaîne cinématique (1) qui peut être connectée à un arbre de prise de force (27) du tracteur (26), dans lequel, dans la position attelée,
- la chaîne cinématique (1) est disposée entre l'arbre de prise de force (27) du tracteur (26) et une transmission d'entraînement (34) du véhicule remorque (33), qui présente un tourillon d'entrée (20 ; 35),
- le timon (15) est accouplé à un dispositif d'attelage (28) du tracteur (26) par un attelage bas,
- la chaîne cinématique (1) s'étend au-dessus du longeron de timon (39) et
- la chaîne cinématique (1) est interposée entre l'arbre de prise de force (27) du tracteur (26) et le tourillon d'entrée (35) du véhicule remorque (33)- au moyen d'un coussinet (9) disposé sur le timon (15),
**caractérisé en ce que**
- le timon (15) comprend des bras de retenue (42 ; 50) et **en ce que** les bras de retenue (42 ; 50) sont connectés de manière supportée sur des boulons (43) au châssis (17) du véhicule remorque (33) et des vérins de levage (45) s'engagent au niveau des extrémités des bras de retenue (42 ; 50), au moyen desquels le timon (15) est supporté à rotation autour d'un axe médian (44) et
- la chaîne cinématique (1) entre le coussinet (9) et le tourillon d'entrée (20 ; 35) du véhicule remorque (33) comprend une articulation (6) dont le centre (13) est disposé sur un axe médian (44) traversant le boulon (43).

2. Véhicule remorque (33) selon la revendication 1, **caractérisé en ce que** le coussinet (9) comprend un arbre (10) avec un tourillon de réception (11) pour un arbre articulé (2) et dans lequel le coussinet (9) est disposé entre les bras de retenue (42 ; 50) de telle sorte que le tourillon de réception (11) pour l'arbre articulé (2) se trouve avant un espace intermédiaire (22) formé par les bras de retenue (42 ; 50).

3. Véhicule remorque (33) selon l'une quelconque des revendications 1 ou 2, **caractérisé en ce que** le coussinet (9) est disposé avant les bras de retenue (42 ; 50), vu dans la direction du tracteur (26).

4. Véhicule remorque (33) selon l'une quelconque des revendications 1 à 3, **caractérisé en ce que** la chaîne cinématique (1) comprend une articulation (6 ; 53) avec une fourche enfichable (54) qui est connectée à un tourillon de sortie (12) d'un arbre (10) supporté dans le coussinet (9) et **en ce que** l'articulation (6 ; 53) est disposée de manière déplaçable axialement sur le tourillon de sortie (12) de l'arbre (10).

5. Véhicule remorque (33) selon la revendication 4, **caractérisé en ce que** l'articulation (6 ; 53) est entourée par un bol de protection et **en ce que** le bol de protection forme une unité avec une protection recouvrant le tourillon de sortie (12) de l'arbre (10).
